(19) Europäisches Patentamt
European Patent Office
Office européen des brevets

(11) EP 3 130 912 B1

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **15181091.8**

(22) Anmeldetag: **14.08.2015**

(51) Int Cl.:
$G01J\ 3/10$ (2006.01)     $G01J\ 3/433$ (2006.01)
$G01N\ 21/39$ (2006.01)

(54) **VERFAHREN ZUR BESTIMMUNG DER KONZENTRATION EINER GASKOMPONENTE UND SPEKTROMETER DAFÜR**

METHOD FOR DETERMINING THE CONCENTRATION OF A GAS COMPONENT AND SPECTROMETER FOR SAME

PROCÉDÉ DE DÉTERMINATION DE LA CONCENTRATION D'UN COMPOSANT GAZEUX ET SPECTROMÈTRE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.02.2017 Patentblatt 2017/07**

(73) Patentinhaber: **SICK AG**
**79183 Waldkirch (DE)**

(72) Erfinder:
• **Edler, Dr. Julian**
**79312 Emmendingen (DE)**
• **Beyer, Dr. Thomas**
**79111 Freiburg (DE)**

(56) Entgegenhaltungen:
**US-A- 5 973 782**     **US-A1- 2011 150 035**
**US-A1- 2014 185 035**

EP 3 130 912 B1

**Beschreibung**

Die Erfindung betrifft Verfahren zur Bestimmung der Konzentration einer Gaskomponente und Spektrometer zur Durchführung des Verfahrens.

Zur Bestimmung der Konzentration einer Gaskomponente eines Messgases sind verschiedene Verfahren bekannt. Dazu gehören die direkte Absorptionsspektroskopie (DAS) und die Wellenlängenmodulationsspektroskopie (WMS).

In der direkten Absorptionsspektroskopie wird die Wellenlänge eines Lasers über eine Stromrampe verändert und das Detektorsignal aufgezeichnet. Durch das Messgas wird beim Durchlaufen der Stromrampe, wenn der Laser den Bereich der Absorptionslinie durchfährt, entsprechend des Lambert-Beer'schen Gesetzes Licht absorbiert.

$$I = I_0 * e^{-\alpha(\lambda)cL}$$

$\alpha(\lambda)$ ist die wellenlängenabhängige Absorption,
c ist die Gaskonzentration,
und L ist die Strecke, über die das Gas absorbiert.

Das Detektorsignal wird dadurch so verformt, dass im Vergleich zum Detektorsignal ohne Gasabsorption eine Absorptionslinie zu erkennen ist, die dann z. B. durch einen Fit mit einer physikalischen Modellfunktion (in der Regel eine Voigt-Absorptionslinie) angefittet wird und so die Absorptionsfläche (Fläche unter der Absorptionskurve) bestimmt werden kann, die proportional zur Gaskonzentration ist.

Es sind auch weitere Auswerteverfahren der direkten Absorptionspektroskopie bekannt, bei denen beispielsweise ohne physikalische Modellfunktionen die Fläche unter der Absorptionslinie bestimmt wird.

Die Wellenlängenmodulationsspektrometrie (WMS) ist eine Form von optischer Absorptionsspektroskopie, die eine Detektion von sehr kleinen optischen Absorptionen ermöglicht, weil die Absorptionsmessungen von kleinen Frequenzen (nahe DC), bei denen die Lichtquellen großes Rauschen aufweisen, zu hohen Frequenzen verschoben werden, bei denen das Schrotrauschen (shot-noise) der begrenzende Faktor ist. Diese Frequenzverschiebung kann die Messempfindlichkeit um drei bis fünf Größenordnungen verbessern.

Die WMS wird in der Regel mit kontinuierlich durchstimmbaren Lasern, wie Diodenlasern (TDL), durchgeführt. Dabei wird die Wellenlänge langsam über eine Absorptionslinie des Messgases durchgestimmt und zusätzlich mit einer demgegenüber hohen Modulationsfrequenz f, typischerweise sinusförmig, leicht moduliert. Wenn der so wellenlängenmodulierte Lichtstrahl sich durch die Messstrecke ausbreitet, ergibt sich aus der Intensitätsänderung des Lasers und durch die Absorption des Messgases eine Amplitudenmodulation des Lichts. Wenn das Licht dann im Lichtempfänger detektiert und ein Empfangssignal in Abhängigkeit der Zeit erzeugt wird, enthält das Empfangssignal AC-Komponenten bei der Modulationsfrequenz f und seinen Obertönen 2f, 3f, 4f, etc.. Für die Auswertung kann eine der AC-Komponenten ausgewählt werden und in einem phasenempfindlichen Verfahren, z. B. mit einem Lock-in-Verfahren, ausgewertet werden. Dieses Verfahren wird auch als Demodulation bezeichnet. Das bei einer Demodulation bei der Frequenz nf erhaltene Signal wird als nf-Signal bezeichnet (n=1,2,3,...). Das demodulierte Signal enthält damit Information bezüglich der optischen Absorption und der Intensität des Lichtstrahls. Über die so gemessene Absorption können Konzentrationen einer Gaskomponente des untersuchten Messgases bestimmt werden.

Eine detaillierte Theorie, die die WMS und die Beziehungen zwischen der Form der Absorptionslinie und der Form des demodulierten Signals beschreibt, ist in "Frequency-modulation spectroscopy for trace species detection: theory and comparison among experimental methods," Applied Optics 31, 707-717(1992) gegeben. Die Signalform, die bei der WMS erhalten wird, wenn man langsam über die Absorptionslinie fährt und gleichzeitig die Wellenlänge bei der Frequenz nf moduliert, entspricht qualitativ der n-ten Ableitung der Absorptionslinie, weswegen für die WMS auch die Bezeichnung derivative Absorptionsspektroskopie verwendet wird.

Aus der DE 102 38 356 A1 ist ein Verfahren bekannt, bei dem die beiden Messverfahren WMS und DAS abwechselnd in aufeinanderfolgenden Perioden angewendet und die detektierten Signale ebenfalls wechselweise zwei getrennten Mittelwertbildungen zugeführt ausgewertet werden. Bei der WMS-Auswertung können die Ergebnisse der DAS-Auswertung herangezogen werden, z. B. zur Kalibrierung. Damit erhält man die Kalibrationsfreiheit der direkten Absorptionsspektroskopie und die Genauigkeit der Wellenlängenmodulationsspektroskopie.

Bei einem aus der US 7,616,316 B2 bekannten Verfahren wird zwischen der DAS bei hohen und WMS bei niedrigen Konzentrationen der zu messenden Gaskomponente umgeschaltet. Es kommt also jeweils das am geeignetsten erscheinende Messverfahren zur Anwendung.

Aus der DE 10 2012 223 874 B3 werden beide Messverfahren, WMS und DAS, gleichzeitig oder wie in der DE 102 38 356 A1 abwechselnd angewendet und die beiden Messergebnisse durch Mittelwertbildung verknüpft, wodurch kleinere Fehler im Ergebnis erzielt werden können.

Die Erfindung hat das Ziel die funktionale Sicherheit, die mit Hilfe sogenannter Safety-Integrated-Level (SIL) definiert werden kann, bei Gaskonzentrationsbestimmungen zu erhöhen, um Sicherheitsnormen, die ein bestimmtes SIL-Niveau definieren, erfüllen zu können. In der funktionalen Sicherheit kann es sein, dass eine Fehlertoleranz von 1 gefordert wird. Dies bezieht sich normalerweise auf die Hardware. Unabhängig von der eingesetzten Hardware können bei der Gaskonzentrationsmessung aber wegen externer Einflüsse, wie Intensitätsfluktuationen, Druckänderungen, Druck, Temperatur und Interferenzen, nicht-zufällige Fehler auftreten. Es ist deshalb Aufgabe der Erfindung, ein im Hinblick auf die funktionale Sicherheit verbessertes Verfahren und Spektrometer zur Bestimmung einer Gaskomponente bereit zu stellen.

Eine solche Erhöhung der Sicherheit könnte durch Anwendung von zwei verschiedenen Messverfahren, DAS und WMS, wie durch die DE 102 38 356 A1 und die DE 10 2012 223 874 B3 bekannt, erzielt werden. Nachteilig ist aber, dass dies eine Verdoppelung des Aufwands, bzgl. Zeit und Apparatur, bedeutet. Bei der in der DE 10 2012 223 874 B3 offenbarten gleichzeitigen Anwendung der Messverfahren muss der Laser mit einer Rampe plus Sinusmodulation angesteuert werden. Das ist für die DAS nachteilig, denn das direkte Detektorsignal bei der WMS ist nicht für eine Auswertung nach der DAS geeignet, da die Sinusmodulation nicht nur zu einer Leistungsmodulation führt, sondern auch zu einer Wellenlängenmodulation. Auch nach einer Mittelung über z. B. eine Sinusperiode ist die Absorption durch die Sinusmodulation verschliffen und die Auswertung schwierig und nicht mehr über einen Fit mit einem physikalischen Modell zu erreichen. Das Ergebnis aus einer solchen DAS ist also nicht so aussagekräftig, da der Laser dafür ungünstig angesteuert wird.

Die Erfindung löst deshalb das Problem auf andere Art und Weise durch zwei alternative Verfahren nach Anspruch 1 bzw. 2 und durch entsprechende Spektrometer nach Anspruch 9 bzw. 10.

Das erfindungsgemäße Verfahren zur Bestimmung der Konzentration einer Gaskomponente umfasst in der ersten Alternative folgende Schritte:

- Erzeugen eines Lichtstrahls mit einer in einem Wellenlängenbereich [$\lambda 1$, $\lambda 2$] variablen Wellenlänge,
- Führen des Lichtstrahls durch ein Messvolumen, in dem die zu bestimmende Gaskomponente vorliegt, wobei die Gaskomponente in dem Wellenlängenbereich eine Absorption aufweist,
- Durchstimmen des Wellenlängenbereichs, wobei während des Durchstimmens eine zusätzliche Modulation der Wellenlänge erfolgt mit einer im Vergleich zur Durchstimmungsrate hohen Modulationsfrequenz (f), so dass sich ein Wellenlänge-Zeit-Verlauf mit hochfrequenter Modulation ergibt,
- Detektieren der Intensität des Lichtstrahls nach Durchtritt durch das Messvolumen,
- während des Durchstimmens Erfassen von Messpunkten, die einen Intensitätswert beinhalten und jeweils zu Zeitpunkten aufgenommen wurden, die einer gleichen Phasenlage der Modulation entsprechen,
- Erzeugen einer künstlichen Messkurve aus den erfassten Messpunkten,

- Auswerten der künstlichen Messkurve und Ermitteln eines ersten Konzentrationswertes daraus.

In der zweiten Alternative umfasst das Verfahren die Schritte:

- Erzeugen eines Lichtstrahls mit einer in einem Wellenlängenbereich ([$\lambda 1$, $\lambda 2$]) variablen Wellenlänge,
- Führen des Lichtstrahls durch ein Messvolumen, in dem die zu bestimmende Gaskomponente vorliegt, wobei die Gaskomponente in dem Wellenlängenbereich eine Absorption aufweist,
- Durchstimmen des Wellenlängenbereichs, wobei während des Durchstimmens eine zusätzliche Modulation der Wellenlänge erfolgt mit einer im Vergleich zur Durchstimmung hohen Modulationsfrequenz (f), so dass sich ein Wellenlänge-Zeit-Verlauf mit hochfrequenter Modulation ergibt,
- Detektieren der Intensität des Lichtstrahls nach Durchtritt durch das Messvolumen,
- während des Durchstimmens Speichern von Messpunkten, die jeweils aus einem Zeitpunkt und dazugehörigem Intensitätswert bestehen,
- Erzeugen einer künstlichen Messkurve aus den gespeicherten Messpunkten, durch Verschieben der Messpunkte auf der Zeitachse,
- wobei die Verschiebung derart erfolgt, dass sich nach Verschiebung in dem Wellenlänge-Zeit-Verlauf ein künstlicher, linearer Verlauf ergibt,
- Auswerten der künstlichen Messkurve und Ermitteln eines ersten Konzentrationswertes daraus.

Vorzugsweise ist die künstliche Messkurve derart angelegt, dass daraus der erste Konzentrationswert nach den Methoden der direkten Absorptionsspektroskopie bestimmbar ist.

Die wesentliche Idee ist somit die Durchführung nur einer Messung, und zwar mit einer Ansteuerung der Lasers, also einer Durchstimmung des Wellenlängenbereichs, für eine Messung nach der WMS. Die erhaltenen Messsignale können dann aber nach zwei verschiedenen Methoden, also z. B. DAS und WMS ausgewertet werden. Auf diese Weise können auf zwei verschiedenen Wegen zwei Ergebnisse erhalten werden. Das ist nur möglich durch die Erfassung der Messpunkte und neue Aneinanderreihung der Messpunkte zur Erzeugung einer künstlichen Messkurve aber aus den bisherigen Messwerten, die dann vorzugsweise nach der DAS ausgewertet werden können. Darin steckt die wesentliche Idee.

In der ersten Alternative ist die künstliche Messkurve aus den Messpunkten mit gleicher Phasenlage erhalten und in der zweiten Alternative auf etwas umständlicherem Weg über die Verschiebung (aller) Messpunkte auf der Zeitskala, also der neuen Aneinanderreihung.

Der wesentliche Vorteil eines solchen Verfahrens ist, dass die Auswertung eines Detektorsignals mit zwei unterschiedlichen Auswertemethoden möglich ist, so dass externe Einflüsse keine nicht-zufälligen Fehler erzeugen können, wodurch ein hohes SIL Level erreicht werden kann.

Um ein bestimmtes SIL Level zu erreichen ist es sinnvoll, einen zweiten Konzentrationswert zu erhalten, was in Weiterbildung der Erfindung dadurch erfolgt, dass nach dem Erfassen und Speichern der Messpunkte eine Auswertung der Original-Messkurve nach den Methoden der Wellenlängenmodulationsspektroskopie durchgeführt wird und ein zweiter Konzentrationswert bestimmt wird.

Damit können die beiden erzeugten Konzentrationswerte dazu verwendet werden, um durch eine Plausibilisierung der Werte zueinander ein höheres Level bezüglich funktionaler Sicherheit zu erreichen.

Die beiden, auf den verschiedenen Wegen erhaltenen Konzentrationswerte können miteinander verglichen werden, um so einen der beiden Werte lediglich zum Verifizieren des anderen zu verwenden.

Zusätzlich oder alternativ könnte man aus den beiden Konzentrationswerten einen gemeinsamen Konzentrationswert durch Mittelwertbildung erzeugen, der dann einen kleineren Fehler als ein Einzelwert hat.

Die Aufgabe wird auch gelöst durch zwei alternative, jeweils den beiden alternativen Verfahren entsprechende Spektrometer gelöst.

In der ersten Alternative umfasst das Spektrometer:

- eine Lichtquelle zum Erzeugen eines Lichtstrahls mit einer in einem Wellenlängenbereich ([λ1, λ2]) variablen Wellenlänge,
- ein Messvolumen, in dem die zu bestimmende Gaskomponente vorliegt und durch das der Lichtstrahl verläuft,
- Ansteuermittel für die Lichtquelle zum Durchstimmen des Wellenlängenbereichs, wobei während des Durchstimmens eine zusätzliche Modulation der Wellenlänge erfolgt mit einer im Vergleich zur Durchstimmung hohen Modulationsfrequenz (f), so dass sich ein Wellenlänge-Zeit-Verlauf mit hochfrequenter Modulation ergibt,
- einen Lichtdetektor zum Detektieren der Intensität des Lichtstrahls nach Durchtritt durch das Messvolumen,
- Speichermittel zum Speichern von Messpunkten während des Durchstimmens, wobei die Messpunkte einen Intensitätswert beinhalten und jeweils zu Zeitpunkten aufgenommen wurden, die einer gleichen Phasenlage der Modulation entsprechen,
- eine Auswerteeinheit, die
- zur Durchführung des Verfahrens in der ersten Alternative eingerichtet ist

In der zweiten Alternative umfasst das Spektrometer:

- eine Lichtquelle zum Erzeugen eines Lichtstrahls mit einer in einem Wellenlängenbereich ([λ1, λ2]) variablen Wellenlänge,
- ein Messvolumen, in dem die zu bestimmende Gaskomponente vorliegt und durch das der Lichtstrahl verläuft,
- Ansteuermittel für die Lichtquelle zum Durchstimmen des Wellenlängenbereichs, wobei während des Durchstimmens eine zusätzliche Modulation der Wellenlänge erfolgt mit einer im Vergleich zur Durchstimmung hohen Modulationsfrequenz (f), so dass sich ein Wellenlänge-Zeit-Verlauf mit hochfrequenter Modulation ergibt,
- einem Lichtdetektor zum Detektieren der Intensität des Lichtstrahls nach Durchtritt durch das Messvolumen,
- Speichermittel zum Speichern von Messpunkten, die jeweils aus einem Zeitpunkt und dazugehörigem Intensitätswert bestehen, während des Durchstimmens,
- eine Auswerteeinheit, die
- zur Durchführung des Verfahrens in der zweiten Alternative eingerichtet ist

In Weiterbildung ist die Lichtquelle ein durchstimmbarer Laser, dessen Emissionswellenlänge durch einen Steuerstrom oder eine Steuerspannung veränderbar ist.

Im Folgenden wird die Erfindung anhand eines Ausführungsbeispiels unter Bezugnahme auf die Zeichnung im Einzelnen erläutert. In der Zeichnung zeigen:

Fig. 1 eine schematische Darstellung des erfindungsgemäßen Spektrometers;

Fig. 2 eine qualitative, schematische Darstellung der Laseransteuerung;

Fig. 3 eine qualitative, schematische Darstellung eines Absorptionssignals einer Messgaskomponente;

Fig. 4 eine Darstellung wie Fig. 2 nach Verschieben der Punkte auf der Zeitskala;

Fig. 5 eine Darstellung eines Ausschnitts aus Fig. 4 zur Verdeutlichung der Verschiebung der Punkte auf der Zeitskala;

Fig. 6 eine Darstellung wie Fig. 3 der künstlichen Messkurve nach Verschieben der Punkte auf der Zeitskala.

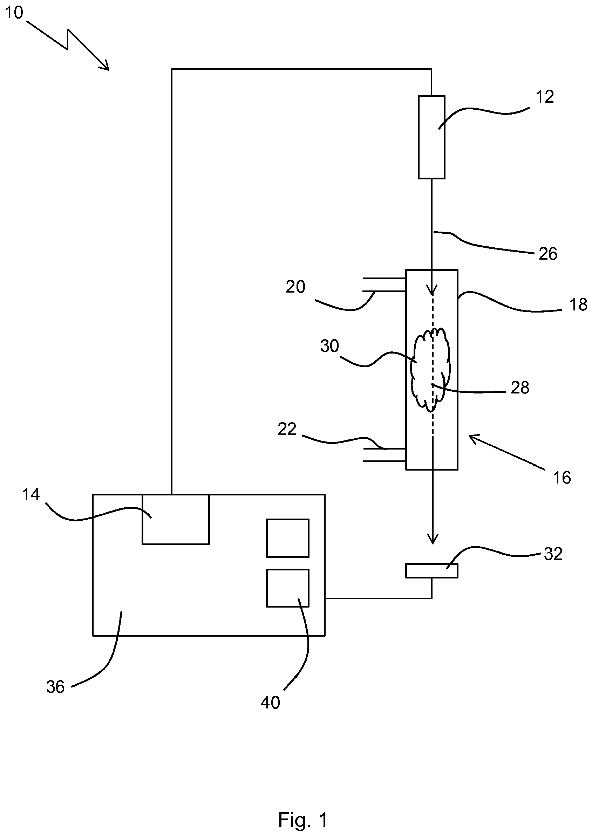

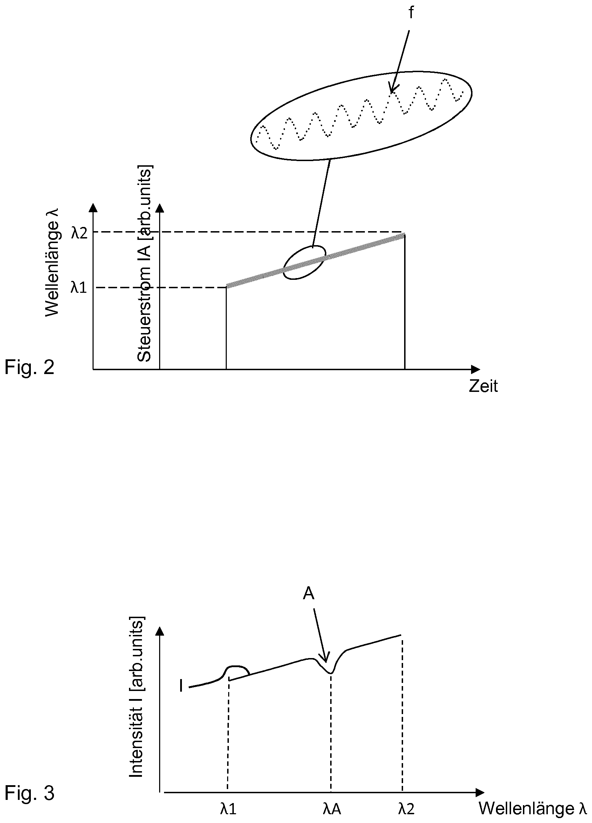

Ein in Fig. 1 schematisch dargestelltes erfindungsgemäßes Spektrometer 10 weist eine Lichtquelle 12 auf, die vorzugsweise als durchstimmbarer Diodenlaser (tunable diode laser, TDL) ausgebildet ist, der mit Ansteuermitteln 14 ansteuerbar ist. Der Durchstimmbereich entspricht einem Wellenlängenbereich [λ1, λ2]. Zur Durchstimmung wird durch die Ansteuermittel 14 ein Steuerstrom IA an den Diodenlaser 12 gegeben, so dass in Abhängigkeit der Stromstärke eine entsprechende Wellenlänge λ erzeugt wird. In Fig. 2 ist die Stromstärke IA des Steuerstroms in Abhängigkeit der Zeit t aufgetragen. Wenn sich die Stromstärke IA ändert, ändert sich

auch die Wellenlänge $\lambda$, wie durch die zwei Ordinatenachsen in Fig. 2 angedeutet werden soll.

Weiter weist das Spektrometer 10 ein Messvolumen 16 auf, das aus einer Messzelle 18 mit Messgaseinlass 20 und Messgasauslass 22 gebildet sein kann. Andere Anordnungen, z. B. offene Systeme ("open path") oder an einer Rohrleitung, die das Messgas führt ("cross duct"), angeschlossene Systeme, sind denkbar. In der Messzelle 18 liegt ein Messgas 30 vor mit einer Gaskomponente, deren Konzentration gemessen werden soll.

Das Licht des Lasers 12 wird in die Messzelle 18 eingekoppelt. Der optische Weg innerhalb der Messzelle bildet eine optische Messstrecke 28. Der optische Weg kann über einen oder mehrere Reflektoren innerhalb oder außerhalb der Messzelle verlängert werden, zum Beispiel in Form einer White- oder Herriott Zelle, um so eine längere optische Messstrecke 28 zu erhalten.

In der Messzelle 18 liegt das Messgas 30 vor, das die zu messende Gaskomponente aufweist. Die Gaskomponente hat in dem durchstimmbaren Wellenlängenbereich eine Absorption A, so dass das die Messstrecke 28 durchlaufende Licht des Lasers 12 bei der Absorptionswellenlänge $\lambda A$ absorbiert wird. Dies ist in Fig. 3 dargestellt, die die durch die Messzelle 18 transmittierte Lichtintensität I in Abhängigkeit der Wellenlänge $\lambda$ zeigt.

Weiter ist ein Lichtdetektor 32 vorgesehen, der das Licht, das die Messstrecke durchlaufen hat, detektiert. Der Detektor 32 kann eine Photodiode, eine Lawinenphotodiode (Avalanche-Photo-Diode) oder auch ein Photomultiplier (PM) sein. Der Lichtdetektor 32 erzeugt in Abhängigkeit der Intensität des einfallenden Lichts ein Empfangssignal.

Das eine elektrische Empfangssignal enthält dann alle Informationen. Es wird optional verstärkt und/oder gefiltert und der Auswerteeinheit 36 zugeführt. Aus dem einen Empfangssignal wird in der Auswerteeinheit 36 letztendlich die Konzentrationen der Gaskomponente ermittelt.

Die Bedeutung der einzelnen Komponenten, deren besondere Ausgestaltungen und Funktionen werden in der folgenden Beschreibung deutlich, wenn die erfindungsgemäßen Verfahren und die Funktionsweise des erfindungsgemäßen Spektrometers 10 beschrieben werden. Dabei wird davon ausgegangen, dass die Funktionsweisen der DAS und der WMS, wie sie auch eingangs kurz erläutert wurden, prinzipiell bekannt sind.

Nach der Erfindung wird der durchstimmbare Laser 12 mittels der Ansteuermittel 38 angesteuert. Die Ansteuerung erfolgt bei Diodenlasern in der Regel über den Steuerstrom IA. Entsprechend dem Steuerstrom IA emittiert der Laser eine bestimmte Wellenlänge $\lambda$. Der so angesteuerte Laser 12 deckt den Wellenlängenbereich $[\lambda 1, \lambda 2]$ ab (Fig. 2 und 3).

Die Ansteuerung des Lasers 12 erfolgt mit einer Stromrampe, wie sie die Fig. 2 zeigt, auf der zusätzlich eine Modulation aufmoduliert ist, die in ihrer Frequenz f groß gegenüber der Durchstimmrate ist und deren Amplitude in der Regel klein ist. Dies ist die typische Ansteuerung für eine WMS. Das sich daraus ergebende Wellenlänge-Zeit-Diagramm zeigt Fig. 2. Es ist eine lineare Rampe zu erkennen, die zusätzliche die hochfrequente Modulation f mit kleiner Amplitude aufzeigt. Die kleine Amplitude und hohe Frequenz f ist in Fig. 2 nur in dem vergrößerten Ausschnitt zu erkennen.

Für die eigentliche Messung wird die Stromrampe mit der darauf liegenden Modulation mit einer Repetitionsrate wiederholt durchlaufen und so die Messung mit der Repetitionsfrequenz wiederholt.

Mit dieser Ansteuerung für eine WMS erhält man selbstverständlich in bekannter Weise nach einer Auswertung nach der WMS Methode einen Konzentrationswert, der im Rahmen dieser Anmeldung als zweiter Konzentrationswert bezeichnet ist.

Die Erfindung betrifft nun die Nutzung der Messdaten, um auch auf andere Art der Auswertung, also nicht mit einer WMS Auswertung, einen weiteren Konzentrationswert zu erhalten, der im Rahmen dieser Anmeldung als erster Konzentrationswert bezeichnet ist. Und zwar werden die Messdaten in geschickter Weise verarbeitet, so dass eine Auswertung vorzugsweise nach den Methoden der DAS möglich ist. Um aus den Messdaten eine Auswertung nach der DAS machen zu können, sieht die Erfindung zwei alternative Wege vor.

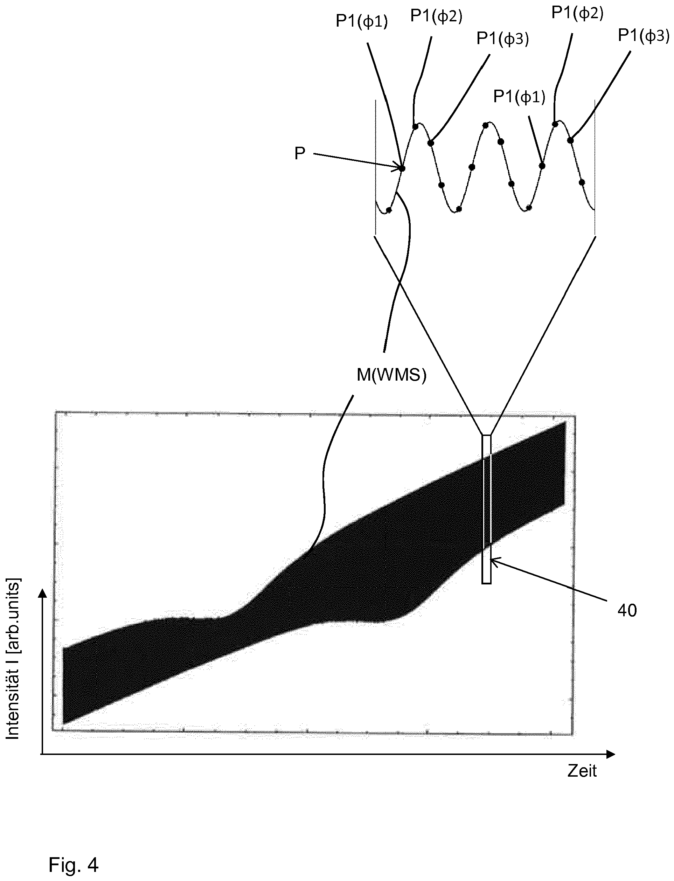

Bei der Ansteuerung des Lasers nach der WMS wie in Fig. 2 qualitativ dargestellt, ergibt sich eine Messkurve wie in Fig. 4 qualitativ dargestellt ist und die mit M(WMS) bezeichnet ist und wie man sie von der WMS kennt. Das in der Darstellung der Fig. 4 als schwarz erscheinende Band, besteht tatsächlich aus einzelnen Messpunkten P, die zu bestimmten Zeitpunkten aufgenommen sind und die erst in einer vergrößerten Ausschnittdarstellung eines Ausschnitts 40 erkennbar werden.

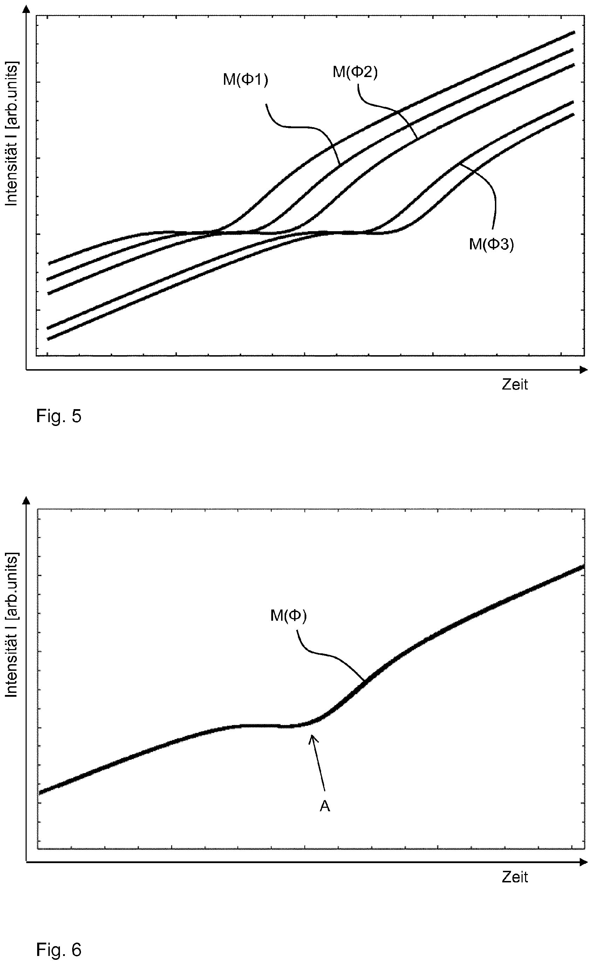

In der ersten Alternative werden beim Durchlaufen des Messbereichs immer Messpunkte P gleicher Phase erfasst und in einem Speicher 40 gespeichert. Also werden z. B. immer Messpunkte P bei einer Phase $\Phi_1$ erfasst, die hier als Messpunkte P1($\Phi$1) bezeichnet sind. Wenn man diese Messpunkte P1($\Phi$1) gesondert betrachtet, ergibt sich eine künstliche Messkurve M($\Phi$1), wie sie in Fig. 5 dargestellt ist. Diese künstliche Messkurve entspricht derjenigen, die man von der DAS kennt, so dass sie die Absorption zeigt und daraus bereits der erste Konzentrationswert ermittelt werden könnte.

Zur Erhöhung der Genauigkeit werden mehrere solcher künstlichen Messkurven jeweils bei anderen Phasen, z. B. bei $\Phi$2 und $\Phi$3, in analoger Weise aufgenommen. So erhält man eine Schar künstlicher Messkurven, von denen in Fig. 5 drei mit M($\Phi$1), M($\Phi$2) und M($\Phi$3) bezeichnet sind. Diese Messkurven lassen sich nun durch Verschieben auf der Zeitachse zu einer Summenmesskurve M($\Phi$) vereinen (Fig. 6). Diese Summenmesskurve M($\Phi$) zeigt die Absorption A aus der sich dann mit höherer Genauigkeit schließlich der erste Konzentrationswert mit den bekannten Auswertemethoden der DAS bestimmen lässt.

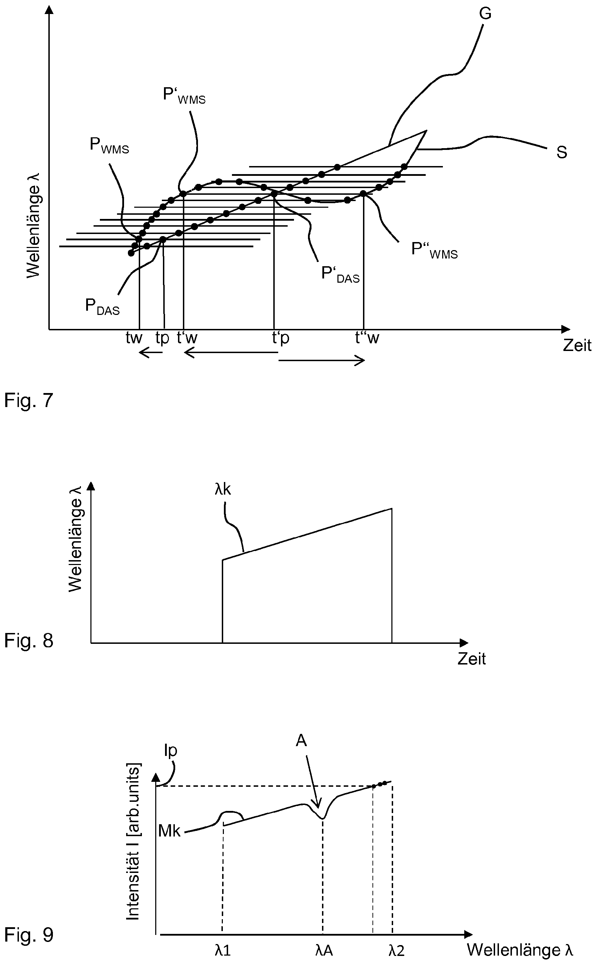

In der zweiten Alternative werden zunächst wie in der ersten Alternative während des Durchstimmens die Messpunkte P aufgenommen und gespeichert. Jeder Messpunkt P besteht aus einem Zeitpunkt tp (dem dann auch eine bestimmte Wellenlänge entspricht) und dazugehörigem Intensitätswert Ip. Alle Messpunkte werden in einem Speicher 40 gespeichert. Aus diesen Messpunkten P einer Durchstimmung (von $\lambda 1$ bis $\lambda 2$) wird ein neuer künstlicher Intensitätsverlauf, also eine künstliche Messkurve erzeugt. Dabei wird wie folgt vorgegangen. Es werden die Messpunkte P auf der Zeitachse (Abszisse) verschoben und quasi neu aneinandergereiht oder anders ausgedrückt "umsortiert". Dabei erfolgt die Verschiebung derart, dass nach Verschiebung (Neuaneinanderreihung) in dem sich ergebenden Wellenlänge-Zeit-Diagramm sich ein linearer Verlauf $\lambda k$ ergibt, wie in Fig. 8 dargestellt. Die zusätzliche hochfrequente Modulation f ist dann nicht mehr vorhanden.

Die Verschiebung (Umsortierung bzw. Neuaneinanderreihung) soll anhand der Fig. 7 erläutert werden. Dort ist nur ein kleiner Ausschnitt aus dem Wellenlänge-Zeit-Diagramm der Fig. 2 dargestellt. Die in Fig. 7 eingezeichneten Punkte $P_{WMS}$ bzw. $P'_{WMS}$, $P''_{WMS}$ sind über die Zeitpunkte tp den gespeicherten Messpunkten P bijektiv zugeordnet. Jeder Punkt $P_{WMS}$, $P'_{WMS}$, $P''_{WMS}$ hat somit eine Zeitkoordinate tw, t'w bzw. t''w und eine der Zeitkoordinate entsprechende Wellenlängenkoordinate. Bei der Durchstimmung mit der zusätzlichen Modulation liegen die Punkte $P_{WMS}$ bzw. $P'_{WMS}$, $P''_{WMS}$ auf der Kurve S wie das Fig. 7 zeigt.

Nun erfolgt aber die Verschiebung (Neuaneinanderreihung), und zwar so, dass sich danach die Gerade G ergibt. Dazu bedarf es einer Verschiebung des Punktes $P_{WMS}$ auf der Zeitachse (horizontal) zu einem neuen Zeitpunkt tp, so dass der Punkt $P_{WMS}$ zu $P_{DAS}$ verschoben ist. Dies erfolgt für die anderen Punkte analog. Um einen sauberen linearen Verlauf G zu erhalten, müssen manche der Punkte $P_{WMS}$ zu gleichen neuen Zeitpunkten tp verschoben werden. So muss z. B. der Punkt $P'_{WMS}$ von seinem Zeitpunkt t'w zu t'p und der Punkt $P''_{WMS}$ von t''w ebenfalls zu t'p verschoben werden. Aus den zwei Punkten $P'_{WMS}$ und $P''_{WMS}$ sind also ein Punkt $P'_{DAS}$ geworden. Je nach Frequenz und Amplitude des sinusförmigen Verlaufs S, also je nach Ansteuerung des Lasers, kann es auch vorkommen, dass mehr als zwei Messpunkte $P_{WMS}$ zu einem einzigen Punkt $P_{DAS}$ verschoben werden.

Mit den so verschobenen und neu "aufgereihten" Messpunkten P, die ja auch einen jeweiligen Intensitätswert beinhalten, wird nun eine künstliche Messkurve Mk, wie sie in Fig. 9 dargestellt ist, in der Auswerteeinheit konstruiert. Die künstliche Messkurve Mk zeigt dann eine Absorption an der Stelle $\lambda A$ und wird nun nach den Methoden der direkten Absorptionsspektroskopie in der Auswerteeinheit 36 ausgewertet, und daraus wird der erste Konzentrationswert nach der zweiten Alternative ermittelt.

**Patentansprüche**

1. Verfahren zur Bestimmung der Konzentration einer Gaskomponente umfassend:

   - Erzeugen eines Lichtstrahls mit einer in einem Wellenlängenbereich ($[\lambda 1, \lambda 2]$) variablen Wellenlänge,
   - Führen des Lichtstrahls durch ein Messvolumen, in dem die zu bestimmende Gaskomponente vorliegt, wobei die Gaskomponente in dem Wellenlängenbereich eine Absorption aufweist,
   - Durchstimmen des Wellenlängenbereichs, wobei während des Durchstimmens eine zusätzliche Modulation der Wellenlänge erfolgt mit einer im Vergleich zur Durchstimmungsrate hohen Modulationsfrequenz (f), so dass sich ein Wellenlänge-Zeit-Verlauf mit hochfrequenter Modulation ergibt,
   - Detektieren der Intensität des Lichtstrahls nach Durchtritt durch das Messvolumen,
   - während des Durchstimmens Erfassen von Messpunkten, die einen Intensitätswert beinhalten und jeweils zu Zeitpunkten aufgenommen wurden, die einer gleichen Phasenlage der Modulation entsprechen,
   - Erzeugen einer künstlichen Messkurve aus den erfassten Messpunkten,
   - Auswerten der künstlichen Messkurve und Ermitteln eines ersten Konzentrationswertes daraus.

2. Verfahren zur Bestimmung der Konzentration einer Gaskomponente umfassend:

   - Erzeugen eines Lichtstrahls mit einer in einem Wellenlängenbereich ($[\lambda 1, \lambda 2]$) variablen Wellenlänge,
   - Führen des Lichtstrahls durch ein Messvolumen, in dem die zu bestimmende Gaskomponente vorliegt, wobei die Gaskomponente in dem Wellenlängenbereich eine Absorption aufweist,
   - Durchstimmen des Wellenlängenbereichs, wobei während des Durchstimmens eine zusätzliche Modulation der Wellenlänge erfolgt mit einer im Vergleich zur Durchstimmung hohen Modulationsfrequenz (f), so dass sich ein Wellenlänge-Zeit-Verlauf mit hochfrequenter Modulation ergibt,
   - Detektieren der Intensität des Lichtstrahls nach Durchtritt durch das Messvolumen,
   - während des Durchstimmens Speichern von Messpunkten, die jeweils aus einem Zeitpunkt und dazugehörigem Intensitätswert bestehen,
   - Erzeugen einer künstlichen Messkurve aus den gespeicherten Messpunkten, durch Verschieben der Messpunkte auf der Zeitachse,
- wobei die Verschiebung derart erfolgt, dass sich nach Verschiebung in dem Wellenlänge-Zeit-Verlauf ein künstlicher, linearer Verlauf ergibt,
- Auswerten der künstlichen Messkurve und Ermitteln eines ersten Konzentrationswertes daraus.

3. Verfahren nach Anspruch 1, **dadurch gekennzeichnet, dass** mehrere künstliche Messkurven erzeugt werden, die jeweils unterschiedlichen Phasen entsprechen.

4. Verfahren nach Anspruch 3, **dadurch gekennzeichnet, dass** aus den mehreren künstlichen Messkurven eine künstliche Summenmesskurve erzeugt wird durch Verschieben der einzelnen künstlichen Messkurven auf der Zeitachse und die Summenmesskurve zur Ermittlung des ersten Konzentrationswertes verwendet wird.

5. Verfahren nach einem der vorhergehenden Ansprüche, **dadurch gekennzeichnet, dass** der erste Konzentrationswert aus der künstlichen Messkurve nach der Methode der direkten Absorptionsspektroskopie bestimmt wird.

6. Verfahren nach einem der vorhergehenden Ansprüche, **dadurch gekennzeichnet, dass** aus den Messpunkten eine Auswertung nach der Methode der Wellenlängenmodulationsspektroskopie durchgeführt wird und ein zweiter Konzentrationswert bestimmt wird.

7. Verfahren nach Anspruch 5, **dadurch gekennzeichnet, dass** die beiden erzeugten Konzentrationswerte dazu verwendet werden, um durch eine Plausibilisierung der Werte zueinander eine erhöhte Sicherheit bezüglich funktionaler Sicherheit zu erreichen.

8. Verfahren nach Anspruch 5 oder 6, **dadurch gekennzeichnet, dass** aus den beiden Konzentrationswerten ein gemeinsamer Konzentrationswert erzeugt wird.

9. Spektrometer mit

- einer Lichtquelle zum Erzeugen eines Lichtstrahls mit einer in einem Wellenlängenbereich ([$\lambda 1$, $\lambda 2$]) variablen Wellenlänge,
- einem Messvolumen, in dem die zu bestimmende Gaskomponente vorliegt und durch das der Lichtstrahl verläuft,
- Ansteuermitteln für die Lichtquelle zum Durchstimmen des Wellenlängenbereichs, wobei während des Durchstimmens eine zusätzliche Modulation der Wellenlänge erfolgt mit einer im Vergleich zur Durchstimmung hohen Modulationsfrequenz (f), so dass sich ein Wellenlänge-Zeit-Verlauf mit hochfrequenter Modulation ergibt,
- einem Lichtdetektor zum Detektieren der Intensität des Lichtstrahls nach Durchtritt durch das Messvolumen,
- Speichermitteln zum Speichern von Messpunkten während des Durchstimmens, wobei die Messpunkte einen Intensitätswert beinhalten und jeweils zu Zeitpunkten aufgenommen wurden, die einer gleichen Phasenlage der Modulation entsprechen,
- einer Auswerteeinheit, die
- zur Durchführung eines Verfahrens nach Anspruch 1

10. Spektrometer mit

- einer Lichtquelle zum Erzeugen eines Lichtstrahls mit einer in einem Wellenlängenbereich ([$\lambda 1$, $\lambda 2$]) variablen Wellenlänge,
- einem Messvolumen, in dem die zu bestimmende Gaskomponente vorliegt und durch das der Lichtstrahl verläuft,
- Ansteuermitteln für die Lichtquelle zum Durchstimmen des Wellenlängenbereichs, wobei während des Durchstimmens eine zusätzliche Modulation der Wellenlänge erfolgt mit einer im Vergleich zur Durchstimmung hohen Modulationsfrequenz (f), so dass sich ein Wellenlänge-Zeit-Verlauf mit hochfrequenter Modulation ergibt,
- einem Lichtdetektor zum Detektieren der Intensität des Lichtstrahls nach Durchtritt durch das Messvolumen,
- Speichermitteln zum Speichern von Messpunkten, die jeweils aus einem Zeitpunkt und dazugehörigem Intensitätswert bestehen, während des Durchstimmens,
- einer Auswerteeinheit, die
- zur Durchführung eines Verfahrens nach Anspruch 2

11. Spektrometer nach Anspruch 9 oder 10, **dadurch gekennzeichnet, dass** die Auswerteeinheit ausgebildet ist zur Bestimmung des ersten Konzentrationswerts nach der Methode der direkten Absorptionsspektroskopie.

12. Spektrometer nach einem der vorhergehenden Ansprüche 9 bis 11, **dadurch gekennzeichnet, dass** die Lichtquelle ein Laser ist, dessen Emissionswellenlänge durch einen Steuerstrom oder eine Steuerspannung veränderbar ist.

13. Spektrometer einem der vorhergehenden Ansprüche 9 bis 12, **dadurch gekennzeichnet, dass** die Auswerteeinheit weiter ausgebildet ist, um aus den Messpunkten eine Auswertung nach der Methode der Wellenlängenmodulationsspektroskopie durchzuführen und einen zweiten Konzentrationswert zu bestimmen.

## Claims

1. A method of determining the concentration of a gas component, the method comprising the steps of:

   - producing a light beam having a wavelength variable in a wavelength range ([A1, λ2]);
   - guiding the light beam through a measurement volume in which the gas component to be determined is present, wherein the gas component has an absorption in the wavelength range;
   - tuning the wavelength range, wherein an additional modulation of the wavelength takes place during the tuning at a modulation frequency (f) which is high in comparison with a rate of the tuning so that a wavelength-to-time progression with a high-frequency modulation results, with the high frequency modulation having a phasing;
   - detecting an intensity of the light beam after passing through the measurement volume;
   - during the tuning, detecting measured points which contain an intensity value and which are each recorded at times which correspond to the same phasing of the high frequency modulation;
   - producing an artificial measurement curve from the detected measured points; and
   - evaluating the artificial measurement curve and determining a first concentration value therefrom.

2. A method of determining the concentration of a gas component, the method comprising the steps of:

   - producing a light beam having a wavelength variable in a wavelength range ([A1, λ2]);
   - guiding the light beam through a measurement volume in which the gas component to be determined is present, wherein the gas component has an absorption in the wavelength range;
   - tuning the wavelength range, wherein an additional modulation of the wavelength takes place during the tuning at a modulation frequency which is high in comparison with a rate of the tuning so that a wavelength-to-time progression with a high-frequency modulation results;
   - detecting the intensity of the light beam after passing through the measurement volume;
   - during the tuning, saving measured points which each comprise a time and an associated intensity value;
   - producing an artificial measurement curve from the saved measured points by shifting the measured points on the time axis;
   - with the shift taking place such that an artificial, linear progression results after the shift in the wavelength-to-time progression; and
   - evaluating the artificial measurement curve and determining a first concentration value therefrom.

3. The method in accordance with claim 1, **characterized in that** a plurality of artificial measurement curves which each correspond to different phases is produced.

4. The method in accordance with claim 3, **characterized in that** an artificial sum measurement curve is produced from the plurality of artificial measurement curves by shifting the single artificial measurement curves on the time scale and the sum measurement curve is used for determining the first concentration value.

5. The method in accordance with any preceding claim, **characterized in that** the first concentration value is determined from the artificial measurement curve in accordance with the method of direct absorption spectroscopy.

6. The method in accordance with any preceding claim, **characterized in that** an evaluation of the measured points is carried out in accordance with the method of wavelength modulation spectroscopy and a second concentration value determined.

7. The method in accordance with claim 5, **characterized in that** the first and second concentration values are used to achieve increased safety with respect to functional safety by a validation of the values with respect to one another.

8. The method in accordance with claim 5 or 6, **characterized in that** a common concentration value is produced from the first and second concentration values.

9. A spectrometer comprising

   - a light source for producing a light beam having a wavelength variable in a wavelength range ([λ1, λ2]);
   - a measurement volume in which the gas component to be determined is present and through which the light beam runs;
   - control means for the light source for tuning the wavelength range, wherein an additional modulation of the wavelength takes place during the tuning at a modulation frequency (f) which is high in comparison with a rate of the tuning so that a wavelength-to-time progression with a high-frequency modulation results;
- a light detector for detecting the intensity of the light beam after passing through the measurement volume;
- storage means for saving measured points during the turning, wherein the measured points include an intensity value and are each recorded at times which correspond to the same phasing of the modulation;
- an evaluation unit
- which is adapted to carry out a method of claim 1.

10. A spectrometer comprising

- a light source for producing a light beam having a wavelength variable in a wavelength range ([$\lambda 1$, $\lambda 2$]);
- a measurement volume in which the gas component to be determined is present and through which the light beam runs;
- control means for the light source for tuning the wavelength range, wherein an additional modulation of the wavelength takes place during the tuning at a modulation frequency (f) which is high in comparison with a rate of the tuning so that a wavelength-to-time progression with a high-frequency modulation results;
- a light detector for detecting the intensity of the light beam after passing through the measurement volume;
- storage means for saving measured points which each comprise a time and an associated intensity value during the tuning;
- an evaluation unit
- which is adapted to carry out a method of claim 2.

11. The spectrometer in accordance with claim 9 or 10, **characterized in that** the evaluation unit is configured to determine the first concentration value in accordance with the method of direct absorption spectroscopy.

12. The spectrometer in accordance with any preceding claim 9 to 11, **characterized in that** the light source is a laser whose emission wavelength is variable by one of a control current and a control voltage.

13. The spectrometer in accordance with any preceding claim 9 to 12, **characterized in that** the evaluation unit configured to carry out an evaluation in accordance with the method of wavelength modulation spectroscopy and to determine a second concentration value from the measured point.

**Revendications**

1. Procédé pour la détermination de la concentration d'un composant gazeux incluant les étapes consistant à :

- engendrer un rayon lumineux avec une longueur d'onde variable dans une plage de longueurs d'onde ([$\lambda 1$, $\lambda 2$]),
- mener le rayon de lumière à travers un volume de mesure dans lequel se présente le composant gazeux à déterminer, ledit composant gazeux présentant une absorption dans la plage de longueurs d'onde,
- parcourir la plage de longueurs d'onde, et pendant le parcours a lieu une modulation supplémentaire de la longueur d'onde avec une fréquence de modulation (f) élevée par comparaison à la vitesse de parcours, de sorte qu'il en résulte une évolution longueur d'onde/temps présentant une modulation à haute fréquence,
- détecter l'intensité du rayon de lumière après traversée du volume de mesure,
- pendant la traversée, saisir des points de mesure qui présentent une valeur d'intensité et qui ont été enregistrés respectivement à des instants qui correspondent à une même position en phase de la modulation,
- engendrer une courbe de mesure artificielle à partir des points de mesure saisis,
- évaluer la courbe de mesure artificielle et déterminer à partir de celle-ci une première valeur de concentration.

2. Procédé pour la détermination de la concentration d'un composant gazeux, incluant les étapes consistant à :

- engendrer un rayon lumineux avec une longueur d'onde variable dans une plage de longueurs d'onde ([$\lambda 1$, $\lambda 2$]),
- mener le rayon de lumière à travers un volume de mesure dans lequel se présente le composant gazeux à déterminer, ledit composant gazeux présentant une absorption dans la plage de longueurs d'onde,
- parcourir la plage de longueurs d'onde et, pendant le parcours a lieu une modulation supplémentaire de la longueur d'onde avec une fréquence de modulation (f) élevée par comparaison à la vitesse de parcours, de sorte qu'il en résulte une évolution longueur d'onde/temps présentant une modulation à haute fréquence,
- détecter l'intensité du rayon de lumière après traversée du volume de mesure,
- pendant le parcours, mémoriser des points de mesure qui sont respectivement constitués d'un instant et d'une valeur d'intensité associée,

- engendrer une courbe de mesure artificielle à partir des points de mesure mémorisés, par déplacement des points de mesure sur l'axe des temps,
- dans lequel le déplacement a lieu de telle façon qu'il en résulte après déplacement une évolution artificielle linéaire dans l'évolution longueur d'onde/temps,
- évaluer la courbe de mesure artificielle et déterminer à partir de celle-ci une première valeur de concentration.

3. Procédé selon la revendication 1, **caractérisé en ce que** l'on génère plusieurs courbes de mesure artificielles, qui correspondent chacune à des phases différentes.

4. Procédé selon la revendication 3, **caractérisé en ce que** l'on engendre à partir de plusieurs courbes de mesure artificielles une courbe de mesure de somme artificielle, par déplacement des courbes de mesure artificielles individuelle sur l'axe des temps et la courbe de mesure somme est utilisée pour déterminer la première valeur de concentration.

5. Procédé selon l'une des revendications précédentes, **caractérisé en ce que** la première valeur de concentration est déterminée à partir de la courbe de mesure artificielle d'après la méthode de la spectroscopie par absorption directe.

6. Procédé selon l'une des revendications précédentes, **caractérisé en ce que** l'on exécute à partir des points de mesure une évaluation d'après la méthode de la spectroscopie par modulation de longueur d'onde et on détermine une seconde valeur de concentration.

7. Procédé selon la revendication 5, **caractérisé en ce que** les deux valeurs de concentration engendrées sont utilisées pour atteindre, grâce à une évaluation de plausibilité des valeurs l'une par rapport à l'autre, une meilleure sécurité pour ce qui concerne la sécurité fonctionnelle.

8. Procédé selon la revendication 5 ou 6, **caractérisé en ce que** l'on engendre une valeur de concentration commune à partir des deux valeurs de concentration.

9. Spectromètre comprenant

- une source de lumière pour engendrer un rayon de lumière avec une longueur d'onde variable dans une plage de longueurs d'onde ([λ1, λ2]),
- un volume de mesure dans lequel se présente le composant gazeux à déterminer et à travers lequel se déplace le rayon de lumière,
- un moyen de pilotage pour la source de lumière afin de parcourir la plage de longueurs d'onde, et pendant le parcours a lieu une modulation supplémentaire de la longueur d'onde avec une fréquence de modulation (f) élevée par comparaison à la vitesse de parcours, de sorte qu'il en résulte une évolution longueur d'onde/temps avec une modulation à haute fréquence,
- un détecteur de lumière pour détecter l'intensité du rayon de lumière après traversée du volume de mesure,
- un moyen de mémorisation pour mémoriser des points de mesure pendant le parcours, et les points de mesure incluent une valeur d'intensité et ont été enregistrés chacun à des instants qui correspondent à une même position en phase de la modulation,
- une unité d'évaluation, qui est conçue pour mettre en oeuvre un procédé selon la revendication 1.

10. Spectromètre comprenant

- une source de lumière pour engendrer un rayon de lumière avec une longueur d'onde variable dans une plage de longueurs d'onde ([λ1, λ2]),
- un volume de mesure dans lequel se présente le composant gazeux à déterminer et à travers lequel se déplace le rayon de lumière,
- un moyen de pilotage pour la source de lumière afin de parcourir la plage de longueurs d'onde, et pendant le parcours a lieu une modulation supplémentaire de la longueur d'onde avec une fréquence de modulation (f) élevée par comparaison à la vitesse de parcours, de sorte qu'il en résulte une évolution longueur d'onde/temps avec une modulation à haute fréquence,
- un détecteur de lumière pour détecter l'intensité du rayon de lumière après traversée du volume de mesure,
- un moyen de mémorisation pour mémoriser des points de mesure qui sont respectivement constitués d'un instant et d'une valeur d'intensité associée, pendant le parcours,
- une unité d'évaluation, qui est conçue pour mettre en oeuvre un procédé selon la revendication 2.

11. Spectromètre selon la revendication 9 ou 10, **caractérisé en ce que** l'unité d'évaluation est réalisée pour déterminer la première valeur de concentration d'après la méthode de la spectroscopie par absorption directe.

12. Spectromètre selon l'une des revendications précédentes 9 à 11, **caractérisé en ce que** la source de lumière est un laser, dont la longueur d'onde d'émission est modifiable par un courant de commande ou par une tension de commande.

**13.** Spectromètre selon l'une des revendications précédentes 9 à 12, **caractérisé en ce que** l'unité d'évaluation est en outre réalisée pour effectuer à partir des points de mesure une évaluation d'après la méthode de la spectroscopie par modulation de longueur d'onde et pour déterminer une seconde valeur de concentration.

10

12

26

20

18

30

28

22

16

14

32

36

40

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- DE 10238356 A1
- US 7616316 B2
- DE 102012223874 B3


**In der Beschreibung aufgeführte Nicht-Patentliteratur**

- Frequency-modulation spectroscopy for trace species detection: theory and comparison among experimental methods. *Applied Optics,* 1992, vol. 31, 707-717